Europäisches Patentamt

European Patent Office

Office européen des brevets

(11) Publication number: **0 346 144**
**A1**

## EUROPEAN PATENT APPLICATION

(21) Application number: 89305866.9

(22) Date of filing: 09.06.89

(51) Int. Cl.⁴: **C 03 C 14/00**
**C 04 B 35/80**

(30) Priority: 10.06.88 US 205137

(43) Date of publication of application:
13.12.89 Bulletin 89/50

(84) Designated Contracting States:
BE DE ES FR GB IT NL

(71) Applicant: GTE PRODUCTS CORPORATION
1209 Orange Street
Wilmington Delaware 19801 (US)

(72) Inventor: Smith, Dale c/o GTE Lighting Products
GTE Products Corporation 100, Endicott Street
Danvers Massachusetts 01923 (US)

Johnston, David W. c/o GTE Lighting Products
GTE Products Corporation 100, Endicott Street
Danvers Massachusetts 01923 (US)

Marlor, Richard C. c/o GTE Lighting Products
GTE Products Corporation 100, Endicott Street
Danvers Massachusetts 01923 (US)

Snell, Richard G. c/o GTE Lighting Products
GTE Products Corporation 100, Endicott Street
Danvers Massachusetts 01923 (US)

Saxton, Jay G c/o GTE Lighting Products
GTE Products Corporation 100, Endicott Street
Danvers Massachusetts 01923 (US)

(74) Representative: Bubb, Antony John Allen et al
GEE & CO. Chancery House Chancery Lane
London WC2A 1QU (GB)

(54) Ceramic article with improved chemical resistance.

(57) An impervious, soda-lime glass-based ceramic article having improved chemical resistance is disclosed. The impervious ceramic article of the present invention is prepared from a raw batch formulation including soda-lime glass cullet, wollastonite, and clay. A raw batch formulation for making an impervious soda-lime glass-based ceramic article is also disclosed. In a preferred embodiment, the raw batch formulation includes from about 40 to about 80 weight percent soda-lime glass cullet; from about 5 to about 35 weight percent wollastonite; 0 to about 10 weight percent bentonite; from about 5 to about weight percent clay (the clay component not including bentonite); from about 0 to about 10 weight percent flint; and from about 0 to about 5 weight percent plasticizer.

EP 0 346 144 A1

# EP 0 346 144 A1

**Description**

## CERAMIC ARTICLE WITH IMPROVED CHEMICAL RESISTANCE

This invention relates to ceramics. More particularly, this invention relates to glass-based ceramics.

The composition of most impervious ceramics is a mixture of naturally-occurring raw materials such as clays, feldspar, kaolins, talcs, etc. In some instances, a small amount (e.g., less than 10%) of man-made "body flux", such as frit, glass cullet, etc., is utilized in the composition. The behavior during processing of these impervious ceramic products and the subsequent fired properties of these products are a result of the variations which characterize naturally-occurring raw materials. The variations in naturally-occurring raw materials also cause color variations from run-to-run. This is experienced, for example, in the manufacture of unglazed, impervious, ceramic tile from such naturally-occurring raw materials.

As a result, impervious ceramic articles manufactured using naturally-occurring raw materials are often accompanied by a disclaimer which states that run-to-run shade variation is an inherent characteristic of the ceramic article.

The use of naturally-occurring raw material variations also limits the degree to which the dimensional properties of impervious ceramic articles can be controlled.

While it is not widely practiced, quantities of ground soda-lime glass cullet have been utilized in ceramic body batches in the manufacture of some tile in order to reduce the temperature at which the ceramic articles are fired.

In accordance with the present invention, it has been found that the chemical resistance of an impervious soda-lime glass-based ceramic article is improved by the inclusion of wollastonite in the raw batch formulation used to prepare the article.

The impervious soda-lime glass-based ceramic article of the present invention is prepared from a raw batch formulation comprising from about 40 to about 80 weight percent virgin soda-lime glass cullet; from about 5 to about 30 weight percent clay, 0 to about 10 weight percent bentonite, and from about 5 to about 35 weight percent wollastonite.

As used herein, "impervious" means an article with water absorption of 0.5 percent or less.

In accordance with another aspect of the present invention, there is provided a raw batch formulation for making an impervious soda-lime glass-based ceramic article. The raw batch formulation comprises from about 40 to about 80 weight percent virgin soda-lime glass cullet; from about 5 to about 35 weight percent wollastonite; from about 5 to about 30 weight percent clay; and 0 to about 10 weight percent bentonite. The raw batch formulation of the present invention may further include from about 0 to about 10 weight percent flint and/or from about 0 to about 5 weight percent non-clay plasticizers.

The present invention is directed to an impervious soda-lime glass-based ceramic article of predetermined shape having improved resistance to attack by chemical substances such as acids and bases. The present invention is further directed to a raw batch formulation for preparing such ceramic article.

In accordance with the present invention, it has been found that the chemical resistance of impervious ceramic articles, prepared from a raw batch mixture having a high soda-lime glass content and clay, is improved by the inclusion therein of wollastonite.

The inclusion of wollastonite in the raw batch formulation at least partially, and preferably totally, inhibits the formation in the ceramic body of primary and/or secondary crystalline phases, such as nepheline ($Na_2O \cdot Al_2O_3$ $2SiO_2$), albite ($Na_2O \cdot Al_2O_3$ $6SiO_2$), etc., which are soluble in acidic media, such as hydrochloric acid or acetic acid, or basic media, such as aqueous solutions of strong bases, e.g., KOH, NaOH, etc. The presence of such crystalline phase or phases in an impervious soda-lime glass based ceramic article having a matte finish causes the surface of the ceramic article to etch when a ceramic article containing such phases is exposed to or is in direct contact with such chemical substances.

The impervious soda-lime glass-based ceramic article of the present invention is prepared from a raw batch formulation comprising from about 40 to about 80 weight percent virgin soda-lime glass cullet, from about 5 to about 30 weight percent clay, 0 to about 10 weight percent bentonite, and from about 5 to about 35 weight percent wollastonite. Depending upon the specific properties desired in the final product, the proportions of the various raw batch constituents can be varied within these stated compositional ranges.

The clay component of the present invention may be a single clay or a mixture of two or more clays. As used herein, the term "clay" refers to all materials classified as clay materials in the ceramic art with the one exception of bentonite. The bentonite component of the raw batch formulation of the present invention is determined independently of the clay component.

Soda-lime glass-based ceramic articles of the present invention meet or exceed the specification entitled "Resistance of Ceramic Tile to Chemical Substances" [C650-83] developed by ASTM for the tile industry. The details of such specification require flat pieces of ceramic tile to be exposed to a specific chemical substance (e.g. 10% HCl, 4% acetic acid, etc.) at room temperature for a period of 24 hours. After the ceramic tile pieces have been exposed to the chemical substance for the requisite time period, the ceramic tile pieces are removed from the chemical substance and visually examined for corrosion.

As an alternative to determining etch resistance by visual inspection of the surface of the glass based ceramic article before and after chemical treatment, etch resistance can be measured by color difference. Color difference is measured by calculating the Total Color Difference, $\Delta E$, which is measured in Judds. Total Color Difference is calculated from the following equation:

$$\Delta E = [\Delta L^2 + \Delta a^2 + \Delta b^2]^{1/2}$$

The values for the variables L, a, and b used in the foregoing equation are derived from the % reflectance (at specific wavelengths) vs. wavelength for the visual range.

"L" represents "whiteness": for perfect white L = 100; for perfect black L = 0.

"a" represents red vs. green (+a = red; -a = green).

"b" represents yellow vs. blue (+b = yellow; -b = blue).

The numerical values for L, a, and b are obtained using a color measurement instrument, such as a Tristimulus colorimeter. Total Color Difference determination is well-known in the ceramic tile art.

A ceramic article of the present invention having improved chemical etch resistance has a $\Delta$ E value less than or equal to 2 judds. A $\Delta$ E value greater than 2 judds corresponds to a very highly visible surface etching. Preferably $\Delta$ E is less than or equal to 1; and most preferably $\Delta$ E is less than or equal to 0.5.

A preferred raw batch formulation for making an impervious soda-lime glass based ceramic article comprising a mixture of 50-70% virgin soda-lime glass cullet, 10-25% clay, 0-10% bentonite, and 15-30% wollastonite. A preferred clay raw material is kaolin. Kaolin, having a low impurity content, fires out white and is an inexpensive source of clay.

Preferably the bentonite content is greater than zero. Most preferably, the bentonite is from about 5 to about 9 weight percent of the raw batch formulation. The inclusion of bentonite is particularly advantageous with a clay component comprising kaolin because kaolin does not, in itself, have sufficient plasticity to produce a tile with high green strength. Soda-lime glass based ceramic articles of the preferred batch formulation experienced no or a very slightly visible etch when subjected to an acid etch test using any of 10% hydrochloric, 10% phosphoric, 4% acetic acid, and sulfamic acid.

In a most preferred embodiment of the present invention the formation of such crystalline phases is further inhibited by including wollastonite in the raw batch formulation in conjunction with reducing the kaolin clay content of the raw batch formulation to be no more than 20 weight percent of the raw batch formulation.

As a raw material, wollastonite $(CaO.SiO_2)$ does not liberate gases, such as water or carbon dioxide, when subjected to heating. This prevents bloating of the fast fired ceramic tile. An added advantage associated with the use of wollastonite in the present invention is that wollastonite, because it is considered a flux, enhances sintering.

The composition of a typical commercially available wollastonite is as follows:

TABLE I

| Material | Weight % |
|---|---|
| $SiO_2$ | 51.91 |
| CaO | 42.10 |
| $Al_2O_3$ | 1.82 |
| MgO | 1.49 |
| $Fe_2O_3$ | 0.34 |
| $Na_2O$ | 0.27 |
| MnO | 0.03 |
| L.O.I. | 2.04 |

The soda-lime glass cullet used in the raw batch formulation is virgin soda-lime glass cullet. As used herein, "virgin soda-lime glass cullet" refers to ground soda-lime glass which exhibits essentially no alkali ex-solution and essentially no moisture or surface ion adsorption. As used herein, "essentially no" refers to amounts below those measurable by currently available means of detection.

Virgin soda-lime glass cullet is ground soda-lime glass particles, the surfaces of which have not been permitted to weather. Weathering occurs when, as a result of exposure to atmospheric moisture, alkalis, most notably sodium, are leached from the glass and migrate to the glass surface. Finely-ground soda-lime glass has a very high free energy on its surface as a result of the number of (free) non-bridging ions created when the glass is fractured during the grinding process. This high surface free energy causes the glass to have a very high affinity for water, which is adsorbed on the fractured surface of the glass.

Although from the foregoing definition of virgin soda-lime glass cullet it would be clear to the skilled artisan how to prepare cullet in such condition, the following is exemplary of a preferred method for preparing virgin soda-lime glass cullet and is not to be construed as limiting thereof.

Virgin soda-lime glass cullet is prepared by, for example, dry grinding soda-lime glass to form cullet of the desired particle size at a point in time sufficiently close to the time of preparing the raw batch mixture so as to avoid the effects of weathering on the exposed surfaces of the ground glass particles. Alternatively, if one does not wish to operate under the time constraints of using the ground glass at a time sufficiently close to the time of grinding so as to avoid weathering, the unweathered ground soda-lime glass cullet can be stored under a dry atmosphere or other conditions chosen to prevent weathering until time of use.

To maintain the virgin soda-lime glass cullet in its non-weathered condition during the preparation of the impervious soda-lime glass based ceramic article of the present invention, the raw batch ingredients should be dry ground and dry mixed.

The raw batch formulation of the present invention preferably utilizes virgin soda-lime glass cullet in a finely-ground condition. Finely-ground virgin soda-lime glass cullet preferably has a particle size ranging from about 1 micron to about 44 microns. Use of virgin soda-lime cullet having a nominal particle size smaller than 1 micron can create firing instability due to a greatly enhanced glass reactivity in the composition. Further, if the nominal particle size becomes too small, achievement of an intimate raw material blend can be inhibited.

To obtain the desired particle size of the glass cullet for use in the present invention, soda-lime glass is preferably subjected to a dry grinding operation to yield a finely-ground product, having a particle size from about 1 micron to about 44 microns.

A variety of devices, such as, for example, fluid energy mills, attrition mills, ball mills, etc., are available to perform this dry grinding operation.

Particle size classification of the dry ground virgin soda-lime glass cullet can be accomplished, for example, either through a screening process or through air classification. Such classification systems are well known to those skilled in the art.

Preferably, the virgin soda-lime glass employed in the raw batch formulation of the present invention includes at least about 50 weight percent silica ($SiO_2$), which includes many commercially available soda-lime glasses. An example of typical commercial soda-lime glass for use in the present invention includes 60-80% $SiO_2$, 10-20% alkali metal oxide, 3-15% CaO, 0-10% MgO, and less than a total of about 20 weight percent for all of $Al_2O_3$, $Fe_2O_3$ and/or $B_2O_3$.

A more specific example of a preferred soda-lime glass composition for use as a raw batch component is:

TABLE II

| Material | Weight % |
|---|---|
| $SiO_2$ | 73.05 |
| $Al_2O_3$ | 1.45 |
| CaO | 5.02 |
| MgO | 3.54 |
| $Na_2O$ | 16.68 |
| $K_2O$ | 0.30 |

An example of an equally preferred soda-lime glass composition is:

TABLE III

| Material | Weight % |
|---|---|
| $SiO_2$ | 73.00 |
| $Al_2O_3$ | 1.45 |
| CaO | 5.67 |
| MgO | 4.00 |
| $Na_2O$ | 15.60 |
| $K_2O$ | 0.28 |

Examples of clays which can be used in the raw batch formulation include kaolin (a refractory, white-firing clay with kaolinite as its predominant mineral); ball clay (a white-to-cream firing clay which is highly plastic); and montmorillonite type clays (bentonite, hectorite etc.). Preferably the clay has a particle size from about 0.1 micron to about 44 microns.

Use of kaolin permits the manufacture of a very white firing product. To obtain a buff or red firing product, a variety of ball clays can be substituted for kaolin.

Compositions of typical kaolinitic type clays include from 44-49% $SiO_2$, 36-40% $Al_2O_3$, 0-2% $Na_2O$, 0-2% $K_2O$, 0-3% $TiO_2$, 0-1% $Fe_2O_3$, 0-1% CaO and MgO, and 11-14% LOI. Typical montmorillonitic type clay compositions (montmorillonite, beidellite, bentonite, hectorite, saponite, sauconite) range from 34-70% $SiO_2$, 0-22% $Al_2O_3$, 0-10% CaO, 0-25% MgO, 0-3% $Na_2O$, 0-3% $Fe_2O_3$, 5-12% LOI, and 0-1% $K_2O$ and $TiO_2$ impurities. A typical bentonite clay (GK 129, Georgia Kaolin Company, Union, NJ) would have a composition:

4

TABLE IV

| | |
|---|---|
| $SiO_2$ | 67.20% |
| $Al_2O_3$ | 15.20 |
| MgO | 3.20 |
| CaO | 1.92 |
| $Fe_2O_3$ | 1.87 |
| $TiO_2$ | 0.16 |
| $Na_2O$ | 2.58 |
| $K_2O$ | 0.96 |
| LOI | 5.70 (1050°C) |

A more specific example of the composition of a typical kaolin is as follows:

TABLE V

| Material | Weight % |
|---|---|
| $SiO_2$ | 45.16 |
| $Al_2O_3$ | 38.76 |
| CaO | 0.20 |
| MgO | 0.09 |
| $Na_2O$ | 0.10 |
| $Fe_2O_3$ | 0.50 |
| $TiO_2$ | 1.51 |
| $SO_3$ | 0.13 |
| $P_2O_5$ | 0.04 |
| Loss on Ignition (L.O.I.) | 13.40 |

The raw batch formulation of the present invention may further include flint and/or a plasticizer. The compositional range for flint is from 0% to 10% of the batch by weight; and the range for the plasticizer is from about 0 to 5% of the batch by weight. The inclusion of flint with kaolin permits a greater degree of stability during the firing process. Preferably, the average particle size of the flint, if used, is from about 9 to about 12 microns and the particle size of the plasticizer, if used is about 1 micron.

Preferably the flint composition includes at least 99 weight percent $SiO_2$.

A more specific example of a preferred flint composition is:

TABLE VI

| Material | Weight % |
|---|---|
| $SiO_2$ | 99.60 |
| $Al_2O_3$ | 0.27 |
| $Fe_2O_3$ | 0.018 |
| $TiO_2$ | 0.028 |
| L.O.I. | 0.10 |

To further improve the green strength of the soda-lime glass-based ceramic article, other plasticizers such as methocel, polyethylene glycol, acrylic resin (Elvacite, Dupont), or a stearate can be added in amounts up to 5 weight percent.

In order to obtain a final product of a particular color, various ceramic colorants may be added to the batch. These colorants can be in the form of raw oxides or they can be selected from the wide range of ceramic pigments (or stains) available commercially. The relative amount and type of colorant used will vary according to the specific stain used and according to the color desired in the final product.

The raw batch formulation of the present invention is particularly advantageous when used to make impervious soda-lime glass based ceramic tile, especially tile for use in structural applications, e.g., floor tile.

The following is exemplary of preferred embodiments of the present invention and is not to be construed as necessarily limiting thereof.

EXAMPLES I - X

Examples I-X were prepared having the raw batch formulations set forth in Table VII. The raw batch formulations further included body stain which was added as a superaddition to the batch.

The virgin soda-lime glass cullet was prepared from the glass ribbon by-product of an incandescent bulb manufacturing process, which glass had the composition shown in Table III. Such glass ribbon was dry ground to have an average particle size from about 10 to about 12 microns by a Hardinge mill.

The wollastonite used in Examples I-X was Vansil W20, obtained from R.T. Vanderbilt Co., Inc. Vansil W20 has the composition shown in Table I. The wollastonite had a median particle size of about 9 to about 10 microns.

The kaolin used in Examples I-X was Kaolex D6, obtained from J.M. Huber Co. Kaolex D6 has the composition shown in Table V. The kaolin had an average particle size of about 1 micron.

The bentonite used in Examples I-X was GK 129 Bentonite from Georgia Kaolin Company, Union, NJ, having the composition shown in Table IV.

In each of Examples I-X, an impervious soda-lime glass based article with a matte finish in the shape of a floor tile (nominal dimensions 6" X 6" X 3/8") was prepared following the method steps described below.

## TABLE VIIA

### RAW BATCH FORMULATION (Wt. %)

|  | Ex. I | Ex. II | Ex. III | Ex. IV | Ex. V | Ex. VI | Ex. VII | Ex. VIII | Ex. IX | Ex. X |
|---|---|---|---|---|---|---|---|---|---|---|
| Glass | 60 | 60 | 60 | 60 | 60 | 58 | 57 | 56 | 55 | 54 |
| Wollastonite | 20 | 19 | 18 | 16 | 15 | 25 | 25 | 25 | 25 | 25 |
| Kaolin | 15 | 15 | 15 | 15 | 15 | 12 | 12 | 12 | 12 | 12 |
| Bentonite | 5 | 6 | 7 | 9 | 10 | 5 | 6 | 7 | 8 | 9 |

TABLE VIIB

PELLET SIZE

| Screen Analysis | Ex. I | Ex. II | Ex. III | Ex. IV | Ex. V | Ex. VI | Ex. VII | Ex. VIII | Ex. IX | Ex. X |
|---|---|---|---|---|---|---|---|---|---|---|
| 6 mesh | -- | -- | -- | -- | -- | -- | -- | -- | -- | -- |
| 12 mesh | 2.93 | 2.91 | 3.29 | 3.39 | 4.46 | 3.23 | 2.32 | 3.78 | 3.25 | 4.95 |
| 20 mesh | 13.74 | 15.22 | 15.52 | 17.33 | 17.81 | 12.23 | 11.58 | 13.70 | 13.49 | 15.04 |
| 40 mesh | 20.43 | 22.22 | 24.37 | 27.49 | 29.43 | 18.19 | 19.02 | 21.60 | 22.65 | 23.49 |
| 60 mesh | 14.02 | 16.82 | 19.48 | 22.88 | 23.83 | 11.97 | 13.91 | 17.16 | 19.56 | 20.40 |
| 100 mesh | 23.49 | 24.30 | 23.49 | 19.13 | 17.01 | 23.77 | 26.77 | 25.11 | 24.28 | 22.69 |
| 200 mesh | 21.70 | 15.79 | 11.69 | 8.00 | 5.96 | 24.54 | 22.15 | 15.41 | 13.87 | 11.21 |
| Pan | 3.69 | 2.74 | 2.16 | 1.78 | 1.50 | 6.08 | 4.25 | 3.23 | 2.90 | 2.21 |

The batch ingredients were precisely weighed and dry mixed for two minutes at 2880 RPM in an Eirich mixer. Water (12.3 wt. %) was then added to the dry mixture, followed by mixing at 2880 RPM for one minute and at 1440 RPM for two minutes. The granules formed were passed through a 35 mesh (0.5 mm opening) screen. Fines, i.e., particles having a size less than 100 mesh (0.15 mm opening), were diverted back into the mixer/pelletizer for re-agglomeration.

The granules were partially dried to yield a residual moisture content of 6.5% by heating the granules on a screen in a dryer at 275°C for 20 minutes. The body formulation material was then placed in a plastic bag overnight to allow moisture content to equalize.

The body formulation material was then screened through a six mesh screen to break up any lumps of pellets caused by drying.

The screened material was pressed in a cavity of 6.113 inches square to a pressure of 2.5 tons per square inch.

The pieces were fired at a 54-minute cycle at a temperature of 975° to achieve less than 0.1% water absorption.

The finished impervious virgin soda-lime glass based ceramic tile had the characteristics set forth in Table VIII below:

TABLE VIII

| | Ex. I | Ex. II | Ex. III | Ex. IV | Ex. V | Ex. VI | Ex. VII | Ex. VIII | Ex. IX | Ex. X |
|---|---|---|---|---|---|---|---|---|---|---|
| Bulk Density[a] | 1.01 | 1.02 | 1.02 | 1.03 | 1.02 | 0.98 | 1.00 | 1.00 | 1.01 | 1.01 |
| Green Thickness[b] | .464 | .457 | .456 | .466 | .454 | .472 | .478 | .486 | .476 | .476 |
| Wt. % $H_2O$[c] | 7.5 | 7.7 | 7.9 | 7.8 | 8.3 | 6.3 | 5.6 | 4.7 | 5.1 | 5.2 |
| Green Strength[d] | 57 | 81 | 74 | 91 | 92 | 58 | 63 | 67 | 73 | 78 |
| Surface Roughness[e] | 130-170 | 120-180 | 80-150 | 110-170 | 110-190 | 120-150 | 120-170 | 120-180 | 100-150 | 100-180 |
| Shrinkage (%) | 5.40 | 5.54 | 5.19 | 4.99 | 4.25 | 4.64 | 4.92 | 5.07 | 4.74 | 4.99 |
| Acid Etch (Yes/No) | No | No | No | No | No | No | No | No | No | No |

[a] g/cc
[b] Inches
[c] At time of pressing
[d] (Lbs per inch thickness)
[e] Micro-inches (avg. peak-to-valley depth on finished product surface)

EP 0 346 144 A1

## EXAMPLES XI - XVII

Examples XI-XVII were prepared as set forth below.

### TABLE IX

#### Composition (wt. %)

| Example | Soda-Lime Glass | Kaolin Clay | Wollastonite | Firing Temperature (°C) |
|---|---|---|---|---|
| XI | 53.66 | 26.34 | 20.00 | 1050 |
| XII | 50.00 | 20.00 | 30.00 | 1040 |
| XIII | 60.33 | 29.67 | 10.00 | 1040 |
| XIV | 60.33 | 24.67 | 15.00 | 1040 |
| XV | 60.00 | 20.00 | 20.00 | 940 |
| XVI | 65.00 | 15.00 | 20.00 | 900 |
| XVII | 70.00 | 15.00 | 15.00 | 870 |

In each of the foregoing Examples, the glass, kaolin, and wollastonite components of the raw batch formulation were used in the designated weight percent amounts. The specific raw batch materials used were: virgin soda-lime glass cullet, the glass being unweathered Type SG-91 glass supplied by GTE Products Corporation, Wellsboro, PA; the clay being kaolin, KAOLEX D6, supplied by J.M. Huber Clay Corp.; and wollastonite supplied by R.T. Vanderbilt. The particle sizes of the components in Examples XI-XVII are similar to those specified for Examples I - X.

In each of Examples XI-XVII, laboratory size batches of 100 grams were prepared by weighing the ingredients into a blender and mixing them at high speed for several minutes. The dry blend was then placed in a glass bottle, 7% by-weight deionized water was added to the dry blend, and the mixture was stirred. The damp mix was then placed in a plastic bag and rolled with a glass bottle to simulate a Muller mixer action. This batch was then forced through a ten mesh screen. The mixed batch was then returned to the bottle and "aged" for an hour for the moisture to become more uniformly distributed.

Twenty gram lots were then weighed out and pressed in a die having a cavity 3/8" x 4". A 4530 psi force was applied with a hydraulic press to produce a 4" test bar that was approximately 3/8" square.

These bars were then placed in a drying oven at about 110°C until ready for firing. At this time the bars were placed on a piece of fiberfax board and pre-fired at 575°C for fifteen minutes and then transferred quickly to the final firing furnace at the selected firing temperature for ten minutes. The firing temperatures are set forth in the foregoing Table IX. These firing temperatures were chosen to obtain matured bars which exhibit a very desirable matte finish.

After firing, the samples were quickly transferred to an annealing oven at 575°C for fifteen minutes and then cooled slowly to room temperature.

To improve etch evaluation, the compositions had 2% by weight Ferro C292 added for color. The products of Examples XI-XVII were etched in 10% HCl for 24 hours at room temperature. The samples for Examples XI and XIV - XVII showed no etching; Example XII exhibited very slight etch; and Example XIII showed slight etch.

The x-ray analyses for samples from Examples XI to XVII reveal a glassy matrix bonding phases of wollastonite and quartz crystals.

The mechanical properties of the present impervious soda-lime glass-based ceramic article are derived from the reactivity, at maturing temperature, of the glassy phase with the crystalline phases in the body composition. For example, the mechanical breaking strength was determined using ASTM C648 (ANSI Specification 5.2.1.3.3). An 8" x 8" x 0.250" tile prepared in accordance with the present invention was measured to have a breaking strength of 390 pounds, which is greater than the ANSI spec. of 250 pounds.

## EXAMPLES XVIII - XXVIII

Examples XVIII-XXVIII were prepared as set forth below.

In each of Examples XVIII-XXVIII an impervious soda-lime glass based article with a matte finish was prepared in the shape of a tile (nominal dimensions 6" X 6" X 3/8").

TABLE X

Composition (wt. %)

| Example | Soda-Lime Glass | Kaolin | Wollastonite |
|---------|-----------------|--------|---------------|
| XVIII | 60.0 | 20.0 | 20.0 |
| XIX | 60.0 | 19.0 | 21.0 |
| XX | 60.0 | 18.0 | 22.0 |
| XXI | 60.0 | 17.0 | 23.0 |
| XXII | 60.0 | 16.0 | 24.0 |
| XXIII | 60.0 | 15.0 | 25.0 |
| XXIV | 61.0 | 19.0 | 20.0 |
| XXV | 62.0 | 18.0 | 20.0 |
| XXVI | 63.0 | 17.0 | 20.0 |
| XXVII | 64.0 | 16.0 | 20.0 |
| XXVIII | 65.0 | 15.0 | 20.0 |

In each of Examples XVIII-XXVIII the components were used in the designated weight percent amounts based upon the raw batch weight. The raw materials used were: virgin soda-lime glass cullet having a particle size of about 200 mesh, the glass being unweathered type SG-91 glass supplied by GTE Products Corporation, Wellsboro, Pennsylvania; the clay being kaolin, KAOLEX D6, supplied by J.M. Huber Clay Corporation, having a particle size of about 325 mesh; and wollastonite supplied by R.J. Vanderbilt, having a particle size of about 325 mesh.

In each of Examples XVIII-XXVIII, laboratory size batches of 250 grams were prepared by weighing the ingredients into a blender and mixing them at high speed for several minutes. The dry blend was then placed in a glass bottle, 7% by weight deionized water was added to the dry blend, and the mixture was stirred. The damp mix was then placed in a plastic bag and rolled with a glass bottle to simulate a Muller mixer action. This batch was then forced through a twelve mesh screen.

The entire batch was pressed in the Lema press in a die having a cavity 6" x 6". A 5000 psi force was applied with a hydraulic press to produce a tile with the above described nominal dimensions.

These tiles were then placed in a drying oven at about 110°C until ready for firing. At this time the tiles were placed on a piece of refractory metal screen in a roller hearth kiln (maximum temperature 1000°C) at a schedule equivalent to cone 09, to produce an impervious virgin soda-lime glass-based ceramic tile having a matte finish. (Cooling capacity is an inherent part of the kiln operation.)

After firing, the samples were quickly transferred to an annealing oven at 575°C for fifteen minutes and then cooled slowly to room temperature.


EXAMPLES XXIX-XXXIV

Examples XXIX-XXXIV were prepared as set forth below.

In each of Examples XXIX-XXXIV an impervious soda-lime glass based article with a matte finish was prepared in the shape of a tile (nominal dimensions 6" X 6" X 3/8").

Table XI below identifies the components and the weight percentage of each component in the raw batch formulation for each of Examples XXIX-XXXIV. Table XI also sets forth the results of acid etch tests conducted on the impervious glass-based ceramic articles prepared for each example.

## TABLE XI

| Example | RAW BATCH FORMULATION (Weight %) | | | ACID ETCH TEST | | | |
|---|---|---|---|---|---|---|---|
| | | | | 1050°C, 8 Mins. $\Delta$ E | | 1060°C, 8 Mins. $\Delta$ E | |
| | Glass | Kaolin | Wollasto-nite | HCl | HAc | HCl | HAc |
| XXIX | 54.0 | 26.0 | 20.0 | 2.98 | BV* | SV** | SV |
| XXX | 56.0 | 24.0 | 20.0 | SV** | SV** | 1.39 | 0.79 |
| XXXI | 58.0 | 22.0 | 20.0 | 1.02 | 1.22 | 1.23 | 0.79 |
| XXXII | 60.0 | 20.0 | 20.0 | 0.33 | 0.81 | 0.66 | 0.32 |
| XXXIII | 54.0 | 20.0 | 26.0 | 1.08 | 1.18 | 0.94 | 0.86 |
| XXXIV | 54.0 | 20.0 | 26.0 | 0.41 | 0.72 | 0.71 | 0.28 |

*BV: E > 2.0
**SV: E = 1.0 - 2.0

In each of Examples XXIX-XXXIV the components were used in the designated weight percent amounts based upon the raw batch weight. The raw materials used were: virgin soda-lime glass cullet having a particle size -200 mesh, the glass being unweathered type SG-91 glass supplied by GTE Products Corporation, Wellsboro, Pennsylvania; the clay being kaolin, KAOLEX D6, supplied by J.M. Huber Clay Corporation, having a particle size -325 mesh; and wollastonite supplied by R.J. Vanderbilt, having a particle size -325 mesh.

In each of Examples XXIX-XXXIV, laboratory size batches of 250 grams were prepared by weighing the ingredients into a blender and mixing them at high speed for several minutes. The dry blend was then placed in a glass bottle, 7% by weight deionized water was added to the dry blend, and the mixture was stirred. The damp mix was then placed in a plastic bag and rolled with a glass bottle to simulate a Muller mixer action. This batch was then forced through a twelve mesh screen.

The entire batch was pressed in the Lema press in a die having a cavity 6" x 6". A 5000 psi force was applied with a hydraulic press to produce tile with the above described nominal dimensions.

These tiles were then placed in a drying oven at about 110°C until ready for firing. At this time the tiles were placed on a piece of refractory metal screen in a roller hearth kiln (maximum temperature 1000°C) at a schedule equivalent to cone 09, to produce an impervious virgin soda-lime glass-based ceramic tile having a matte finish. (Cooling capacity is an inherent part of the kiln operation).

To improve etch evaluation, the compositions had 2% by weight Ferro C292 Blue stain added for color.

The articles of each of Examples XXIX-XXXIV were tested in hydrochloric acid (HCl) and tested in acetic acid (HAc) under the time and temperature conditions specified in Table XI.

The pressures, firing temperatures, and firing times described in the foregoing Examples are merely representative of conditions conducive to the formation of the requisite matte finish of the articles prepared from the raw batch formulations described. Persons of ordinary skill in this art will recognize that other conditions of pressure, temperature and time will also be conducive to the formation of such a matte finish.

While there has been shown and described what are considered preferred embodiments of the present invention, it will be obvious to those skilled in the art that various changes and modifications may be made therein without departing from the invention as defined by the appended claims.

## Claims

1. An impervious soda-lime glass-based ceramic article of predetermined shape, said impervious ceramic article being prepared from a raw batch formulation comprising about 40 to about 80 weight percent virgin soda-lime glass cullet, from about 5 to about 35 weight percent wollastonite, 0 to about 10 weight percent bentonite, and from about 5 to about 30 weight percent clay.

2. An impervious virgin soda-lime glass-based article of predetermined shape in accordance with Claim 1, wherein said article comprises $SiO_2$, $Al_2O$, $CaO$, $MgO$, $Na_2O$, $K_2O$, and $Fe_2O_3$.

3. An impervious soda-lime glass-based article of predetermined shape in accordance with Claim 1 or 2, wherein said article comprises 66.4 weight percent $SiO_2$, 8.2 weight percent $Al_2O_3$, 11.8 weight percent $CaO$, 3.0 weight percent $MgO$, 10.2 weight percent $Na_2O$ and 0.2 weight percent $K_2O$, and less than 1 weight percent $Fe_2O_3$.

4. An impervious soda-lime glass-based article of predetermined shape in accordance with any one of Claims 1 - 3, wherein said raw batch formulation comprises from 50 - 70% virgin soda-lime glass cullet, from 15 - 30% wollastonite, from 5 - 9% bentonite, and from 10 - 25% clay.

5. An impervious glass-based article of predetermined shape in accordance with any one of Claims 1 - 4, wherein said article is a floor tile.

6. A raw batch formulation for making an impervious soda-lime glass-based ceramic article, said raw batch formulation comprising:
from about 40 to about 80 weight percent virgin soda-lime glass cullet;

from about 5 to about 35 weight percent wollastonite;
from 0 to about 10 weight percent bentonite;
from about 5 to about 30 weight percent clay; and
from about 0 to about 10 weight percent flint.

7. A raw batch formulation for making an impervious soda-lime glass-based ceramic article in accordance with Claim 6, wherein said clay is selected from the group consisting of kaolin, ball clay, and montmorillonite type clays other than bentonite.

8. A raw batch formulation for making an impervious soda-lime glass-based ceramic article in accordance with Claim 6 or 7, wherein said clay is present in said raw batch formulation in an amount from about 10 to about 25 weight percent.

9. A raw batch formulation for making an impervious soda-lime glass-based ceramic article in accordance with any one of Claims 6 - 8, wherein said soda-lime glass cullet comprises virgin soda-lime glass cullet comprising at least about 50 weight percent $SiO_2$, from about 3 to about 15 weight percent CaO; from about 5 to about 20 weight percent $Na_2O$, from about 0 to 10 weight percent MgO, from 0 to 10% $K_2O$, and from 0 to 5% $Al_2O_3$.

10. A raw batch formulation for making an impervious soda-lime glass-based ceramic article in accordance with any one of Claims 6 - 8, wherein said article comprises 66.4 weight percent $SiO_2$, 8.2 weight percent $Al_2O_3$, 11.8 weight percent CaO, 3.0 weight percent MgO, 10.2 weight percent $Na_2O$ and 0.2 weight percent $K_2O$, less than 1 weight percent $Fe_2O_3$.

11. A raw batch formulation as claimed in any one of Claims 6 - 10, for making an impervious soda-lime glass-based ceramic tile, wherein said virgin soda-lime glass cullet has a particle size in the range of from about 44 to about 1 micron; said clay has a particle size in the range of from about 0.1 to 44 microns; said wollastonite has an average particle size of 10 microns; said flint has an average particle size less than 200 mesh, and further comprising from about 0 to about 5 weight percent plasticizer, said plasticizer having an average particle size no larger than 1 micron.

12. A raw batch formulation for making an impervious soda-lime glass-based ceramic tile in accordance with Claim 11, wherein said plasticizer comprises acrylic resin, methocel, polyethylene glycol, or a stearate.

13. A raw batch formulation for making an impervious soda-lime glass-based ceramic tile in accordance with Claim 11 or 12, wherein said clay is kaolin clay comprising from about 44 to about 49 weight percent $SiO_2$; from about 36 to about 40 weight percent $Al_2O_3$; and trace amounts of CaO, MgO, $Na_2O$, $K_2O$, $TiO_2$, $P_2O_5$, $SO_3$, and $Fe_2O_3$.

14. A raw batch formulation for making an impervious soda-lime glass-based ceramic tile in accordance with Claim 11 or 12, wherein said clay is a montmorillonitic clay other than bentonite, said clay comprising from 34 - 70 weight percent $SiO_2$, 0 - 22 weight percent $Al_2O_3$, 0 - 10 weight percent CaO, 0 - 25 weight percent MgO, from 0 - 3% $Fe_2O_3$, a LOI of 5 - 12%, and 0 - 1% of $K_2O$ and $TiO_2$ impurities.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CHEMICAL ABSTRACTS, vol. 103, no. 14, 7th October 1985, page 269, abstract no. 109051p, Columbus, Ohio, US; & SU-A-1 159 904 ("KAMEN I SILIKATY" SCIENTIFIC-INDUSTRIAL ENTERPRISES) 07-06-1985 * Abstract * | 1,2,6,8 ,9,13, 14 | C 03 C  14/00 C 04 B  35/80 |
| Y | PATENT ABSTRACTS OF JAPAN, vol. 12, no. 40 (C-474)[2887], 5th February 1988; & JP-A-62 191 444 (NORIO SHIMIZU) 21-08-1987 * Abstract * | 1,2,6,8 ,9,13, 14 | |
| A | CHEMICAL ABSTRACTS, vol. 92, no. 10, 10th March 1980, page 290, abstract no. 80979p, Columbus, Ohio, US; N.N. BROVKOVA: "Use of nonconcentrated wollastonite for facing tiles", & STEKLO KERAM. 1979, (11), 15-16 * Abstract * | 1,5-7 | |
| A | US-A-4 524 100  (SHIMIZU) * Claims 3,9,10,14,17-19; examples 6-8,19,22; column 5, lines 42-50 * | 1,6,11, 12 | TECHNICAL FIELDS SEARCHED (Int. Cl.4) C 03 C C 04 B |
| A | PATENT ABSTRACTS OF JAPAN, vol. 12, no. 306 (C-522)[3153], 19th August 1988; & JP-A-63 79 739 (MATSUSHITA ELECTRIC WORKS LTD) 09-04-1988 * Abstract * | 1,6 | |

The present search report has been drawn up for all claims

| Place of search | Date of completion of the search | Examiner |
|---|---|---|
| THE HAGUE | 15-09-1989 | VAN BOMMEL L. |